# EUROPEAN PATENT APPLICATION

(11) **EP 4 756 911 A1**
(43) Date of publication of application: **10.06.2026**
(21) Application number: 25829804.1
(22) Date of filing: 20.06.2025
(51) Int. Cl.: H01M 4/36, H01M 4/62

(54) **SILICON-CARBON NEGATIVE ELECTRODE MATERIAL, AND PREPARATION METHOD THEREFOR AND USE THEREOF**

(30) Priority: 21.06.2024 CN 202410812690
(71) Applicant: Carbon One New Energy Group Co., Ltd., Quzhou, Zhejiang 324000 (CN); Carbon One New Energy Hangzhou Co., Ltd., Hangzhou, Zhejiang 311100 (CN); Zhejiang Lichen New Material Technology Co., Ltd, Huzhou, Zhejiang 313100 (CN)
(72) Inventor: DU, Ning, Hangzhou, Zhejiang 311100 (CN); YUE, Min, Quzhou, Zhejiang 324000 (CN); LIN, Zongxi, Changxing National-level Economic and Technological Development Zone Huzhou, Zhejiang 313100 (CN); YE, Cuicui, Quzhou, Zhejiang 324000 (CN); LU, Chenjie, Quzhou, Zhejiang 324000 (CN)
(74) Representative: Vogelbruch, Keang
(86) International application number: PCT/CN2025/102575
(87) International publication number: WO 2025/261515

(57) **Abstract**

The present invention relates to the technical field of negative electrode materials of a lithium-ion battery. Provided are a silicon-carbon negative electrode material, and a preparation method therefor and the use thereof. A pre-lithiated silicon-carbon negative electrode material comprises a silicon-carbon material substrate as well as a carbon coating layer and a composite coating layer which sequentially coat the silicon-carbon material substrate, wherein the silicon-carbon material substrate comprises a porous carbon substrate and nano silicon particles distributed in pores of the porous carbon substrate; and the composite coating layer comprises a high-dielectric-constant material and a lithium-containing polymer. The composite coating layer of the pre-lithiated silicon-carbon negative electrode material has a high-dielectric-constant material, which can undergo self-polarization under the action of an electric field, such that the dissociation of a lithium salt in a lithium-containing polymer is promoted, more lithium ions are converted into active lithium, and active lithium loss caused by SEI film formation and other side reactions is compensated, thereby improving the capacity and initial efficiency of the battery, and improving the reversibility of an electrode reaction, which is beneficial for improving the cycle stability of the battery.

## Description

### Cross-Reference to Related Applications

The present disclosure claims priority to Chinese Patent Application No. 202410812690.4, filed with the China National Intellectual Property Administration on June 21, 2024, and entitled "PRE-LITHIATED SILICON-CARBON NEGATIVE ELECTRODE MATERIAL, PREPARATION METHOD THEREFOR AND USE THEREOF", which is incorporated herein by reference in its entirety.

### Technical Field

The present disclosure relates to the technical field of negative electrode materials for lithium ion batteries, and in particular to a silicon-carbon negative electrode material, a preparation method therefor and the use thereof.

### Background Art

With the rapid development of electric vehicles and wearable electronic devices, the demand for high-performance batteries is increasing. As a key component of lithium ion batteries, silicon-based negative electrode materials have received extensive research attention in recent years. Silicon is regarded as an ideal negative electrode material due to its high theoretical capacity (up to 4200 mAh/g) and relatively low electrochemical potential. However, silicon will undergo significant volume expansion and contraction during charging and discharging, resulting in structural breakage. In addition, its unstable solid electrolyte interface (SEI) will be formed and broken continuously during repeated charging and discharging, which will lead to the consumption of a lithium source, some of which will become dead lithium and lead to the rapid decay of battery capacity.

Pre-lithiation technology is expected to solve this problem. This technology aims to improve the electrochemical performance of silicon by pre-embedding active lithium, especially in improving the initial coulomb efficiency (ICE) and cycling stability of the battery. The pre-lithiation technology mainly includes the following four methods:
1. Pre-lithiation in the synthesis stage of an active material: (I) surface pre-lithiation: modifying the surface of the active material with a lithium-containing compound by coating or filling; (II) bulk-phase pre-lithiation: mixing lithium metal with the active material and subjecting same to a heat treatment to form a lithium compound inside the active material.
2. Pre-lithiation during slurry mixing: directly adding pre-lithiation additives to an electrode slurry, wherein these additives react with the active material or directly release a lithium source in the process of assembling the battery, thereby providing additional lithium ions.
3. Pre-lithiation in the electrode pre-treatment stage: (I) direct contact method: directly bringing an electrode material into contact with lithium metal to realize pre-lithiation by a chemical reaction; (II) pre-lithiation of lithium-organic composite solution: subjecting an organic solution containing lithium and the electrode material to a chemical reaction to realize pre-lithiation.
4. Pre-lithiation in battery manufacturing process: (I) electrochemical pre-lithiation: introducing an additional electrochemical step in the battery manufacturing process, such as pre-lithiation of an electrode in a half battery; (II) internal design of battery: integrating a lithium metal reserve in the battery design to realize in-situ pre-lithiation during the use of the battery.

According to the above methods, pre-lithiation in the process of surface modification of a silicon-based negative electrode material with a lithium salt is a key and simple method. The lithium salt is dissolved or dispersed in advance with a polymer coating layer, and then the silicon-based negative electrode material is coated and modified to prepare an integrated artificial SEI silicon-carbon negative electrode material. However, a problem with this method is that most of the lithium salts have a stronger binding energy, especially in a solid phase. Due to the lack of enough space and freedom, the interaction and movement between ions are limited, which makes the dissociation process of the lithium salt more difficult (the coating layer where the lithium salt is located is a solid polymer layer). Therefore, the effect of pre-lithiation of the silicon-based material with the lithium salt in the above methods is relatively poor.

Therefore, it is urgent to provide a new type of pre-lithiated silicon-carbon negative electrode material which can solve the problems of the silicon-carbon negative electrode material, such as lower capacity, lower initial coulombic efficiency and poor cycling stability, so as to achieve the purposes of lithium supplementation and capacity improvement.

### Summary

An object of the present disclosure is to provide a silicon-carbon negative electrode material, a preparation method therefor and the use thereof. The silicon-carbon negative electrode material specifically solves the problems of the silicon-carbon negative electrode material, such as lower capacity, lower initial coulombic efficiency and poor cycling stability, and the silicon-carbon negative electrode material of the present disclosure is a silicon-carbon negative electrode material with high capacity, high initial coulombic efficiency and high cycling stability.

In order to achieve the above object, the following technical solution is used in the present disclosure:
in a first aspect, the present disclosure provides a pre-lithiated silicon-carbon negative electrode material, which comprises a silicon-carbon material substrate, and a carbon coating layer and a composite coating layer sequentially coated on the silicon-carbon material substrate,
wherein the silicon-carbon material substrate comprises a porous carbon substrate and nano silicon particles distributed within pores of the porous carbon substrate; and
wherein the composite coating layer comprises a high dielectric constant material and a lithium-containing polymer.

Preferably, the average pore size of the porous carbon substrate is 1-30 mm.

Preferably, the pores of the porous carbon substrate include any one or a combination of at least two of micropores, mesopores or macropores.

Preferably, the pores of the porous carbon substrate include micropores, mesopores and macropores.

Preferably, the volume of the micropores accounts for 60% or more of the total volume of pores of the porous carbon substrate, the volume of the mesopores accounts for 30-40% of the total volume of pores of the porous carbon substrate, and the volume of the macropores accounts for 10% or less of the total volume of pores of the porous carbon substrate.

Preferably, the specific surface area of the porous carbon substrate is 1200-2000 m²/g.

Preferably, the pore volume of the porous carbon substrate is 0.6-2.0 cm³/g.

Preferably, the porous carbon substrate has the following particle size distribution: Dv0 > 0.2 µm; Dv10 > 2 µm; 3 µm < Dv50 < 8 µm; Dv90 < 10 µm; Dv100 < 30 µm.

Preferably, the span of the particle size distribution of the porous carbon substrate is: Span = (Dv90-Dv10)/Dv50 < 1.2.

Preferably, the mass of the porous carbon substrate accounts for 30-60% of the mass of the silicon-carbon material substrate.

Preferably, the nano silicon particles occupy 40-90% of the total volume of pores of the porous carbon substrate.

Preferably, the crystal domain size of the nano silicon particles is 1-10 nm.

Preferably, the mass of the nano silicon particles accounts for 40-70% of the mass of the silicon-carbon material substrate.

Preferably, the thickness of the carbon coating layer is 0.1-10 nm.

Preferably, the mass of the carbon coating layer accounts for 0.5-5.0% of the total mass of the pre-lithiated silicon-carbon negative electrode material.

Preferably, the specific surface area of the carbon coating layer is 50 m²/g or less.

Preferably, the composite coating layer specifically includes the following two forms of structure, form a or form b:
a. sequentially comprising a high dielectric constant material layer and a lithium-containing polymer layer from inside to outside; and
b. a blended layer formed by a high dielectric constant material and a lithium-containing polymer.

Preferably, the mass of the high dielectric constant material accounts for 0.1-5% of the total mass of the pre-lithiated silicon-carbon negative electrode material.

Preferably, the mass of the lithium-containing polymer accounts for 0.1-5% of the total mass of the pre-lithiated silicon-carbon negative electrode material.

Preferably, the high dielectric constant material layer comprises a high dielectric constant material with a relative dielectric constant of 60-500 at a frequency of 40-50 MHz.

Preferably, the high dielectric constant material is selected from any one or a combination of at least two of a ferroelectric material, an oxide material, a ceramic/polymer-based composite material or a Van der Waals layered material.

Preferably, the ferroelectric material is selected from any one or a combination of at least two of a lead-based ferroelectric material, barium titanate, strontium titanate or barium strontium titanate.

Preferably, the oxide material is selected from any one or a combination of at least two of titanium dioxide, zirconium dioxide or niobium pentoxide.

Preferably, the ceramic-polymer-based composite material comprises a silicon nitride-polyvinylidene fluoride-based composite material and/or a zirconium dioxide-polyimide composite material.

Preferably, the Van der Waals layered material comprises bismuth selenium oxide.

Preferably, the lithium-containing polymer layer comprises: a binder, a conductive agent and a lithium salt.

Preferably, the mass of the binder accounts for 0.01-2.5% of the total mass of the pre-lithiated silicon-carbon negative electrode material; the mass of the conductive agent accounts for 0.01-0.5% of the total mass of the pre-lithiated silicon-carbon negative electrode material; and the mass of the lithium salt accounts for 0.01-2% of the total mass of the pre-lithiated silicon-carbon negative electrode material.

Preferably, the binder is selected from any one or a combination of at least two of polyaniline/polyacrylic acid, polydopamine/polyacrylic acid, polydopamine/polyacrylic acid/polyoxyethylene, polyacrylic acid, polyacrylic acid/polycyanoethyl, polyacrylic acid/carboxymethyl cellulose or polyacrylic acid/polystyrene.

Preferably, the conductive agent is selected from any one or a combination of at least two of graphene, acetylene black, carbon black, single-walled carbon nanotubes, multi-walled carbon nanotubes, flake graphite, polyaniline, polypyrrole, polyacetylene, polythiophene or poly(3,4-ethylenedioxythiophene)/polystyrene sulfonic acid.

Preferably, the lithium salt is selected from any one or a combination of at least two of lithium hexafluorophosphate, lithium tetrafluoroborate, lithium perchlorate, lithium hexafluoroarsenate, lithium bis(oxalato)borate, lithium difluoro(oxalato)borate, lithium bis(difluorosulfonyl)imide, lithium bis(trifluoromethylsulfonyl)imide, lithium carbonate, lithium hydroxide, lithium oxide or lithium oxalate.

Preferably, the pre-lithiated silicon-carbon negative electrode material has a carbon content of 30-50 wt% and a silicon content of 40-60 wt%.

Preferably, the particle size distribution Dv50 of the pre-lithiated silicon-carbon negative electrode material is 3-15 µm.

Preferably, the particle size concentration degree of the pre-lithiated silicon-carbon negative electrode material is 0.4-1.1.

Preferably, the specific surface area of the pre-lithiated silicon-carbon negative electrode material is 30 m²/g or less.

In a second aspect, the present disclosure provides a preparation method for a pre-lithiated silicon-carbon negative electrode material of the first aspect, the preparation method including the following steps:
depositing nano silicon particles in the pores of the porous carbon substrate to obtain the silicon-carbon material substrate; and
sequentially preparing the carbon coating layer and the composite coating layer on the silicon-carbon material substrate to obtain the pre-lithiated silicon-carbon negative electrode material.

Preferably, the deposition of the nano silicon particles specifically includes the following steps: introducing a silicon-containing gas source into the porous carbon substrate for vapor deposition to obtain the silicon-carbon material substrate.

Preferably, the silicon-containing gas source comprises a silicon gas source, and the silicon gas source is selected from any one or a combination of at least two of silane, disilane, trisilane or tetrasilane.

Preferably, the volume of the silicon gas source accounts for 60-100% of the total volume of the silicon-containing gas source.

Preferably, the silicon-containing gas source further comprises a protective gas, and the protective gas is selected from any one or a combination of at least two of nitrogen, helium, neon, argon, krypton or xenon.

Preferably, the flow rate of the silicon-containing gas source is 1-50 L/min.

Preferably, the temperature of the vapor deposition is 300-800°C; the heat preservation duration of the vapor deposition is 2-20 h; and the gas pressure of the vapor deposition is 1-10 kPa.

Preferably, a preparation method for the carbon coating layer comprises any one or a combination of at least two of a solid-phase carbon coating treatment, a liquid-phase carbon coating treatment or a vapor-phase carbon coating treatment, and the vapor-phase carbon coating treatment is preferred.

Preferably, the vapor-phase carbon coating treatment specifically includes the following steps:
introducing a carbon-containing gas source into the silicon-carbon material substrate for thermal cracking, to form a carbon coating layer on the silicon-carbon material substrate.

Preferably, the carbon-containing gas source comprises a carbon gas source, and the carbon gas source is selected from any one or a combination of at least two of alkane gases, alkene gases, alkyne gases, aromatic hydrocarbon gases, alcohol gases or ketone gases.

Preferably, the carbon gas source accounts for 60-100% of the total volume of the carbon-containing gas source.

Preferably, the carbon-containing gas source further comprises a protective gas, and the protective gas is selected from any one or a combination of at least two of nitrogen, helium, neon, argon, krypton or xenon.

Preferably, the flow rate of the carbon-containing gas source is 1-50 L/min.

Preferably, the temperature of the thermal cracking is 500-1200°C, the heat preservation duration of the thermal cracking is 1-6 h, and the reaction gas pressure of the thermal cracking is 1-10 kPa.

Preferably, the preparation of the composite coating layer specifically includes the following two methods, method A or method B:
A. firstly preparing a high dielectric constant material layer on a silicon-carbon material substrate with a carbon coating layer, and then preparing a lithium-containing polymer layer on the high dielectric constant material layer to obtain a pre-lithiated silicon-carbon negative electrode material;
B. preparing a blended layer formed by a high dielectric constant material and a lithium-containing polymer on a silicon-carbon material substrate with a carbon coating layer.

Preferably, in the method A, a preparation method for the high dielectric constant material layer is selected from any one or a combination of at least two of a high-temperature solid-phase calcination method, a coprecipitation plus calcination method, an oxalate precipitation method, a hydrothermal method, a vapor-phase method, a citrate method, a sol-gel method or a low-temperature combustion synthesis method, and the sol-gel method is preferred.

Preferably, in the method A, the sol-gel method specifically includes the following steps:
placing the silicon-carbon material substrate with a carbon coating layer in a sol containing a high dielectric constant material, stirring and dispersing same, and then subjecting same to a heat treatment to form a high dielectric constant material layer on the carbon coating layer.

Preferably, the rotational speed of the stirring and dispersing is 500-2000 rpm, and the duration of the stirring and dispersing is 1-5 h.

Preferably, the heating rate of the heat treatment is 1-10°C·min⁻¹, the temperature of the heat treatment is 300-550°C, and the duration of the heat treatment is 15-48 h.

Preferably, in the method A, preparing the lithium-containing polymer layer specifically includes the following steps:
dispersing the silicon-carbon material substrate having the high dielectric constant material layer, a binder, a conductive agent and a lithium salt in water to obtain an aqueous slurry, and then drying same to form a lithium-containing polymer layer on the high dielectric constant material layer, so as to obtain the pre-lithiated silicon-carbon negative electrode material.

Preferably, in the method B, forming the blended layer by a high dielectric constant material and a lithium-containing polymer specifically includes the following steps:
dispersing a silicon-carbon material substrate with a carbon coating layer, a high dielectric constant material, a binder, a conductive agent and a lithium salt in water to obtain an aqueous slurry, and then drying same to form a blended layer formed by the high dielectric constant material and the lithium-containing polymer on the carbon coating layer, so as to obtain the pre-lithiated silicon-carbon negative electrode material.

Preferably, in the method A or B, the solid content of the aqueous slurry is 3-30 wt%.

Preferably, in the method A or B, the temperature for drying is 120-250°C.

In a third aspect, the present disclosure provides a negative electrode plate comprising a pre-lithiated silicon-carbon negative electrode material of the first aspect.

In a fourth aspect, the present disclosure provides a lithium ion battery comprising a pre-lithiated silicon-carbon negative electrode material of the first aspect, or a negative electrode plate of the third aspect.

Preferably, the capacity retention rate of the lithium ion battery after 300 cycles is 94% or more, and more preferably 96% or more.

Preferably, the initial coulombic efficiency of the lithium ion battery is 88% or more.

Preferably, the resistivity of the lithium ion battery is 8 Ω·cm or less.

Compared with the prior art, the present disclosure has the following beneficial effects:
(1) The composite coating layer of the pre-lithiated silicon-carbon negative electrode material of the present disclosure has a high dielectric constant material, which can undergo self-polarization under the action of an electric field, thereby promoting the dissociation of a lithium salt in a lithium-containing polymer, and making more lithium ions to be converted into active lithium, which can compensate the loss of active lithium caused by SEI film formation and other side reactions, thereby improving the capacity and initial coulombic efficiency of the battery.
(2) The pre-lithiated silicon-carbon negative electrode material of the present disclosure has higher initial coulombic efficiency, so that more active lithium can be ensured to participate in the battery cycle, and the reversibility of the electrode reaction is improved, which is beneficial to improving the cycling stability of the battery.
(3) The composite coating layer of the pre-lithiated silicon-carbon negative electrode material of the present disclosure has a high dielectric constant material, which is beneficial to the desolvation of lithium ions at the interface, and is beneficial to increasing the transport rate of lithium ions, thereby improving the fast charging performance of the battery.

### Brief Description of the Drawings

In order to illustrate the technical solutions in the particular embodiments of the present disclosure or in the prior art more clearly, the accompanying drawings to be used in the description of the particular embodiments or the prior art will be briefly introduced below; obviously, the accompanying drawings in the following description show some of the embodiments of the present disclosure, and those of ordinary skill in the art may still obtain other drawings from these accompanying drawings without creative effort.
FIG. 1 is a schematic diagram of the reaction mechanism of the present disclosure.
FIG. 2 is an SEM image of the pre-lithiated silicon-carbon negative electrode material prepared in Example 1 of the present disclosure.

### Detailed Description of Embodiments

Unless otherwise defined herein, scientific and technical terms used in connection with the present disclosure shall have the meanings commonly understood by those of ordinary skill in the art. The meaning and scope of terms should be clear; however, in the case of any potential ambiguity, the definitions provided herein take precedence over any dictionary or foreign definitions. In the present disclosure, unless otherwise stated, the use of "or" means "and/or". Moreover, the use of the term "comprising/including" and other forms is non-limiting.

The technical solutions in the present disclosure will be described clearly and completely below with reference to embodiments. Obviously, the described embodiments are some of, rather than all of, the embodiments of the present disclosure. Based on the embodiments of the present disclosure, all other embodiments obtained by those of ordinary skill in the art without creative efforts fall within the scope of protection of the present disclosure.

In the prior art, it is disclosed that pre-lithiation can be completed by modifying a lithium salt on the surface of a silicon-based negative electrode material, which is a key and simple method. That is, the lithium salt is dissolved or dispersed in advance with a polymer coating layer, and then a silicon-carbon material is coated and modified to prepare a SEI silicon-carbon negative electrode material. However, a problem with this method is that most of the lithium salts have strong binding energy, especially in a solid phase. Due to the lack of enough space and freedom, the interaction and movement between ions are limited, which makes the dissociation process of the lithium salt more difficult (the coating layer where the lithium salt is located is a solid polymer layer). Therefore, this leads to the poor effect of the existing pre-lithiation of the silicon-carbon material with the lithium salt, and in fact, the added lithium salt can not give full play to its role.

In order to solve the above problem, the following technical solution is used in the present disclosure:
in a first aspect, the present disclosure provides a pre-lithiated silicon-carbon negative electrode material, which comprises a silicon-carbon material substrate, and a carbon coating layer and a composite coating layer sequentially coated on the silicon-carbon material substrate,
wherein the silicon-carbon material substrate comprises a porous carbon substrate and nano silicon particles distributed within pores of the porous carbon substrate; and
wherein the composite coating layer comprises a high dielectric constant material and a lithium-containing polymer.

In the present disclosure, a composite coating layer of a high dielectric constant material and a lithium-containing polymer is used to coat the silicon-carbon negative electrode material, which specifically solves the problems of the silicon-carbon negative electrode material, such as lower capacity, lower initial coulombic efficiency and poor cycling stability, and the pre-lithiated silicon-carbon negative electrode material of the present disclosure is a silicon-carbon negative electrode material with high capacity, high initial coulombic efficiency and high cycling stability.

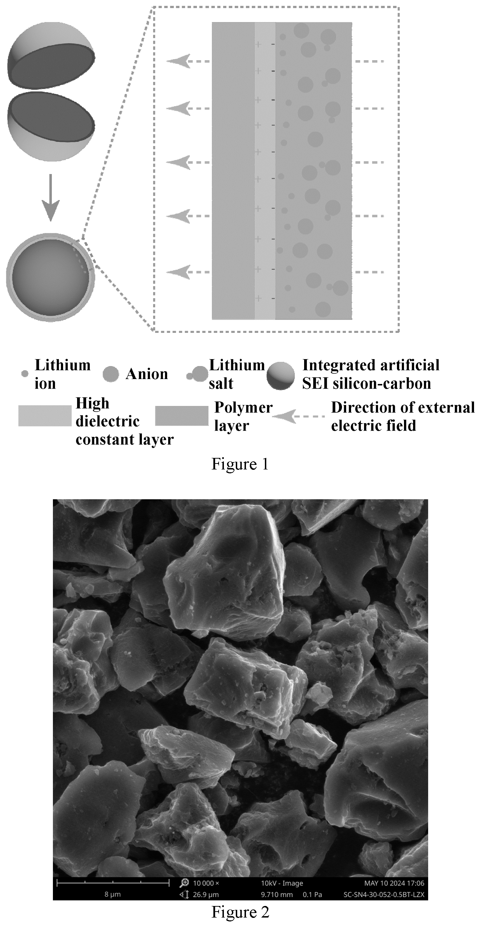

Firstly, as shown in FIG. 1, the high dielectric constant material is used to promote the dissociation of the lithium salt, mainly because the high dielectric constant material will be polarized under the action of electric field, thereby generating a strong electric field on its surface or at the interface in contact with the lithium salt. This enhanced electric field helps to separate lithium ions and anions in the lithium salt, thereby reducing the dissociation energy barrier and making lithium ions easier to release. Secondly, the high dielectric constant material can further promote the dissociation of the lithium salt and the migration of the lithium ions by means of charge redistribution and interface effect. By coating the high dielectric constant coating layer, the problem that lithium ions are difficult to be converted into active lithium in the process of lithium replenishment with the lithium salt is solved.

In an optional embodiment, the average pore size of the porous carbon substrate is 1-30 mm, which may be, for example, 1 mm, 2 mm, 4 mm, 6 mm, 8 mm, 10 mm, 12 mm, 14 mm, 16 mm, 18 mm, 20 mm, 22 mm, 24 mm, 26 mm, 28 mm or 30 mm, etc.

In an optional embodiment, the pores of the porous carbon substrate include any one or a combination of at least two of micropores, mesopores or macropores.

In an optional embodiment, the pores of the porous carbon substrate include micropores, mesopores and macropores.

In an optional embodiment, the volume of the micropores accounts for 60% or more of the total volume of pores of the porous carbon substrate, which may be, for example, 60%, 62%, 64%, 66%, 68%, 70%, 72%, 74%, 76%, 78%, 80%, 82%, 84%, 86%, 88%, 90%, 92%, 94%, 96%, 98% or 100%, etc.

In an optional embodiment, the volume of the mesopores accounts for 30-40% of the total volume of pores of the porous carbon substrate, which may be, for example, 30%, 31%, 32%, 33%, 34%, 35%, 36%, 37%, 38%, 39% or 40%, etc.

In an optional embodiment, the volume of the macropores accounts for 10% or less of the total volume of pores of the porous carbon substrate, which may be, for example, 10%, 9%, 8%, 7%, 6%, 5%, 4%, 3%, 2% or 1%, etc.

In the present disclosure, the pores of the porous carbon substrate are composed of micropores, mesopores and macropores in a specific volume ratio, which can make the silicon deposition more uniform, is beneficial to reducing the absolute volume expansion, and is also beneficial to further improving the initial coulombic efficiency and the initial reversible capacity of the silicon-carbon negative electrode material while ensuring high stability. If the ratio is not within this range, when the macropores contain a plurality of silicon particles, or enough buffer space cannot be provided, and the silicon particles therein are easy to agglomerate, the severe volume expansion caused by lithium intercalation and deintercalation of the silicon particles cannot be effectively alleviated, and the larger specific surface area also makes the silicon particles have more contact with the electrolyte, thereby accelerating the attenuation of the battery capacity and making the cycling stability of the battery poorer.

In an optional embodiment, the specific surface area of the porous carbon substrate is 1200-2000 m²/g, which may be, for example, 1200 m²/g, 1300 m²/g, 1400 m²/g, 1500 m²/g, 1600 m²/g, 1700 m²/g, 1800 m²/g, 1900 m²/g or 2000 m²/g, etc.

In an optional embodiment, the pore volume of the porous carbon substrate is 0.6-2.0 cm³/g, which may be, for example, 0.6 cm³/g, 0.8 cm³/g, 1.0 cm³/g, 1.2 cm³/g, 1.4 cm³/g, 1.6 cm³/g, 1.8 cm³/g or 2.0 cm³/g, etc.

In the present disclosure, the specific surface area and pore volume of the porous carbon substrate are further limited within the above ranges, silicon particles can be better wrapped. Moreover, the porous carbon with higher specific surface area promotes the migration of lithium ions on the surfaces of the electrolyte and active material to a certain extent, and provides a buffer space to adapt to the pressure change caused by the volume change of silicon particles during the continuous lithium intercalation and deintercalation. And an appropriate pore volume can make silicon deposition more uniform, provide better mechanical support for the volume expansion of nano silicon, and effectively reduce the influence of the volume expansion on the electrode material.

In an optional embodiment, the porous carbon substrate has the following particle size distribution: Dv0 > 0.2 µm; Dv10 > 2 µm; 3 µm < Dv50 < 8 µm; Dv90 < 10 µm; Dv100 < 30 µm.

In an optional embodiment, the porous carbon substrate has a particle size distribution of Dv0 > 0.2 µm, which may be, for example, 0.21 µm, 0.25 µm, 0.3 µm, 0.35 µm, 0.4 µm, 0.45 µm, 0.5 µm, 0.6 µm, 0.7 µm, 0.8 µm, 0.9 µm, 1 µm, 1.2 µm, 1.4 µm, 1.6 µm or 1.8 µm, etc.

In an optional embodiment, the porous carbon substrate has a particle size distribution of Dv10 > 2 µm, which may be, for example, 2.1 µm, 2.2 µm, 2.3 µm, 2.4 µm, 2.5 µm, 2.6 µm, 2.7 µm, 2.8 µm or 2.9 µm, etc.

In an optional embodiment, the porous carbon substrate has a particle size distribution of 3 µm < Dv50 < 8 µm, which may be, for example, 3.1 µm, 3.2 µm, 3.5 µm, 3.8 µm, 4 µm, 4.5 µm, 5 µm, 5.5 µm, 6 µm, 6.5 µm, 7 µm, 7.5 µm, 7.8 µm or 7.9 µm, etc.

In an optional embodiment, the porous carbon substrate has a particle size distribution of Dv90 < 10 µm, which may be, for example, 9.9 µm, 9.8 µm, 9.6 µm, 9.4 µm, 9.2 µm, 9 µm, 8.8 µm, 8.6 µm, 8.4 µm or 8.2 µm, etc.

In an optional embodiment, the porous carbon substrate has a particle size distribution of Dv100 < 30 µm, which may be, for example, 29 µm, 28 µm, 26 µm, 24 µm, 22 µm, 20 µm, 18 µm, 16 µm, 14 µm, 12 µm, 11 µm, etc.

In an optional embodiment, the span of the particle size distribution of the porous carbon substrate is: Span = (Dv90-Dv10)/Dv50 < 1.2, which may be, for example, 1.19, 1.18, 1.16, 1.14, 1.12, 1.10, 1.08, 1.06, 1.04, 1.02 or 1.0, etc.

In the present disclosure, the particle size distribution and span of the porous carbon substrate are further limited within the above ranges, which is more conducive to further uniform distribution of silicon and carbon in the negative electrode material, which can further improve the initial reversible capacity and initial coulombic efficiency of the negative electrode material, and further reduce the volume expansion effect during charging.

In an optional embodiment, the mass of the porous carbon substrate accounts for 30-60% of the mass of the silicon-carbon material substrate, which may be, for example, 30%, 32%, 35%, 38%, 40%, 42%, 45%, 48%, 50%, 52%, 55%, 58% or 60%, etc.

In an optional embodiment, the nano silicon particles occupy 40-90% of the total volume of pores of the porous carbon substrate, which may be, for example, 40%, 45%, 50%, 55%, 60%, 65%, 70%, 75%, 80%, 85% or 90%, etc.

In the present disclosure, the nano silicon particles are distributed in the pores of the porous carbon substrate of the present disclosure, occupy 40-90% of its total volume of pores. By utilizing the high theoretical specific capacity of silicon, the overall capacity of the silicon-carbon negative electrode material is improved, and more nano silicon particles are distributed in the pores of the porous carbon substrate, which is more conducive to reducing the volume expansion effect of the silicon-carbon negative electrode material during use.

In an optional embodiment, the crystal domain size of the nano silicon particles is 1-10 nm, which may be, for example, 1 nm, 2 nm, 3 nm, 4 nm, 5 nm, 6 nm, 7 nm, 8 nm, 9 nm or 10 nm, etc.

In an optional embodiment, the mass of the nano silicon particles accounts for 40-70% of the mass of the silicon-carbon material substrate, which may be, for example, 40%, 45%, 50%, 55%, 60%, 65% or 70%, etc.

In an optional embodiment, the thickness of the carbon coating layer is 0.1-10 nm, which may be, for example, 0.1 nm, 0.5 nm, 1 nm, 2 nm, 3 nm, 4 nm, 5 nm, 6 nm, 7 nm, 8 nm, 9 nm or 10 nm, etc.

In an optional embodiment, the mass of the carbon coating layer accounts for 0.5-5.0% of the total mass of the pre-lithiated silicon-carbon negative electrode material, which may be, for example, 0.5%, 1%, 1.5%, 2%, 2.5%, 3%, 3.5%, 4%, 4.5%, 5%, etc.

In an optional embodiment, the specific surface area of the carbon coating layer is 50 m²/g or less, which may be, for example, 50 m²/g, 45 m²/g, 40 m²/g, 35 m²/g, 30 m²/g, 25 m²/g, 20 m²/g, 10 m²/g, 5 m²/g, 4 m²/g, 3 m²/g, 2 m²/g, 1 m²/g, etc.

In the present disclosure, the silicon-carbon material substrate is further coated with a carbon coating layer having a certain thickness. As mentioned above, the specific surface area of the carbon coating layer is 50 m²/g or less, that is, it has a higher density, which is beneficial to isolating the silicon-carbon material substrate from contacting with the electrolyte, thereby further improving the cycling stability. If the carbon coating layer is too thin, the purpose of isolating the silicon-carbon material substrate from contacting with the electrolyte cannot be achieved; if the carbon coating layer is too thick, it is not conducive to the migration of lithium ions, and it is also not conducive to the increase in the specific capacity of the silicon-carbon negative electrode material.

In an optional embodiment, the composite coating layer specifically includes the following two forms of structure, form a or form b:
a. sequentially comprising a high dielectric constant material layer and a lithium-containing polymer layer from inside to outside; and
b. a blended layer formed by a high dielectric constant material and a lithium-containing polymer.

It should be noted that when the composite coating layer has a structure in the form of a, that is, firstly, a high dielectric constant material is coated over the carbon coating layer to form the high dielectric constant material layer, and then a polymer material containing a lithium salt is coated over the formed high dielectric constant material layer to form the lithium-containing polymer layer. When the composite coating layer has a structure in the form of b, that is, a high dielectric constant material and a lithium-containing polymer are mixed so that the two are coated simultaneously over the carbon coating layer, thereby forming a blend layer formed by the high dielectric constant material and the lithium-containing polymer.

In an optional embodiment, the mass of the high dielectric constant material accounts for 0.1-5% of the total mass of the pre-lithiated silicon-carbon negative electrode material, which may be, for example, 0.1%, 0.5%, 1%, 1.5%, 2%, 2.5%, 3%, 3.5%, 4%, 4.5% or 5%, etc.

In an optional embodiment, the lithium-containing polymer accounts for 0.1-5% of the total mass of the pre-lithiated silicon-carbon negative electrode material, which may be, for example, 0.1%, 0.5%, 1%, 1.5%, 2%, 2.5%, 3%, 3.5%, 4%, 4.5% or 5%, etc.

In an optional embodiment, the high dielectric constant material layer comprises a high dielectric constant material with a relative dielectric constant of 60-500 (which may be, for example, 60, 80, 100, 150, 200, 250, 300, 350, 400, 450, 500, etc.) at a frequency of 40 Hz-50 MHz (which may be, for example, 40 Hz, 60 Hz, 80 Hz, 100 Hz, 500 Hz, 1000 Hz, 5000 Hz, 1 MHz, 5 MHz, 20 MHz, 40 MHz, 42 MHz, 44 MHz, 46 MHz, 48 MHz, 50 MHz, etc.).

In the present disclosure, the test conditions for the relative dielectric constant of the high dielectric constant material are as follows: the temperature is standard room temperature (25°C); the gas pressure is standard atmospheric pressure (101.3 kPa); the sample state of the tested material is powder; and the instrument used for the test is an impedance analyzer.

In an optional embodiment, the high dielectric constant material is selected from any one or a combination of at least two of a ferroelectric material, an oxide material, a ceramic/polymer-based composite material or a Van der Waals layered material.

In an optional embodiment, the ferroelectric material is selected from any one or a combination of at least two of a lead-based ferroelectric material, barium titanate (BaTiO₃, BT), strontium titanate (SrTiO₃, ST) or barium strontium titanate ((Ba₁₋ₓSrₓ)TiO₃, BST).

In an optional embodiment, the lead-based ferroelectric material is selected from any one or a combination of at least two of lead zirconate (PbZrO₃), lead titanate (PbTiO₃) or lead zirconate titanate piezoelectric ceramic (PZT).

In an optional embodiment, the chemical formula of the above barium strontium titanate is (Ba₁₋ₓSrₓ)TiO₃, wherein the value of x is 0.3 ≤ x ≤ 0.8, which may be, for example, 0.3, 0.4, 0.5, 0.6, 0.7 or 0.8, etc.

In an optional embodiment, the oxide material is selected from any one or a combination of at least two of titanium dioxide (TiO₂), zirconium dioxide (ZrO₂) or niobium pentoxide (Nb₂O₅).

In an optional embodiment, the ceramic-polymer-based composite material comprises a silicon nitride-polyvinylidene fluoride-based composite material (PVDF/N₄Si₃) and/or a zirconium dioxide-polyimide composite material (PI/ZrO₂).

In an optional embodiment, the Van der Waals layered material comprises bismuth selenium oxide (Bi₂SeO₅).

In an optional embodiment, the lithium-containing polymer layer comprises: a binder, a conductive agent and a lithium salt.

In an optional embodiment, the mass of the binder accounts for 0.01-2.5% of the total mass of the pre-lithiated silicon-carbon negative electrode material, which may be, for example, 0.01%, 0.02%, 0.03%, 0.04%, 0.05%, 0.06%, 0.08%, 0.1%, 0.12%, 0.15%, 0.2% or 0.25%, etc.

In an optional embodiment, the mass of the conductive agent accounts for 0.01-0.5% of the total mass of the pre-lithiated silicon-carbon negative electrode material, which may be, for example, 0.01%, 0.02%, 0.03%, 0.04%, 0.05%, 0.06%, 0.08%, 0.1%, 0.12%, 0.15%, 0.2%, 0.25%, 0.3%, 0.35%, 0.4%, 0.45% or 0.5%, etc.

In an optional embodiment, the mass of the lithium salt accounts for 0.01-2% of the total mass of the pre-lithiated silicon-carbon negative electrode material, which may be, for example, 0.01%, 0.02%, 0.04%, 0.06%, 0.08%, 0.1%, 0.15%, 0.2%, 0.3%, 0.4%, 0.5%, 0.6%, 0.7%, 0.8%, 0.9%, 1%, 1.2%, 1.4%, 1.6%, 1.8% or 2%, etc.

In an optional embodiment, the binder is selected from any one or a combination of at least two of polyaniline/polyacrylic acid, polydopamine/polyacrylic acid, polydopamine/polyacrylic acid/polyoxyethylene, polyacrylic acid, polyacrylic acid/polycyanoethyl, polyacrylic acid/carboxymethyl cellulose or polyacrylic acid/polystyrene.

In an optional embodiment, the conductive agent is selected from any one or a combination of at least two of graphene, acetylene black, carbon black, single-walled carbon nanotubes, multi-walled carbon nanotubes, flake graphite, polyaniline, polypyrrole, polyacetylene, polythiophene or poly(3,4-ethylenedioxythiophene)/polystyrene sulfonic acid.

In an optional embodiment, the lithium salt is selected from any one or a combination of at least two of lithium hexafluorophosphate (LiPF₆), lithium tetrafluoroborate (LiBF₄), lithium perchlorate (LiClO₄), lithium hexafluoroarsenate (LiAsF₆), lithium bis(oxalato)borate (LiBOB), lithium difluoro(oxalato)borate (LiDFOB), lithium bis(difluorosulfonyl)imide (LiFSI), lithium bis(trifluoromethylsulfonyl)imide (LiTFSI), lithium carbonate (Li₂CO₃), lithium hydroxide (LiOH), lithium oxide (Li₂O) or lithium oxalate (Li₂C₂O₄).

In an optional embodiment, the content of carbon in the pre-lithiated silicon-carbon negative electrode material is 30-50 wt%, which may be, for example, 30 wt%, 32 wt%, 34 wt%, 36 wt%, 38 wt%, 40 wt%, 42 wt%, 44 wt%, 46 wt%, 48 wt% or 50 wt%, etc.

In an optional embodiment, the content of silicon in the pre-lithiated silicon-carbon negative electrode material is 40-60 wt%, which may be, for example, 40 wt%, 42 wt%, 44 wt%, 46 wt%, 48 wt%, 50 wt%, 52 wt%, 54 wt%, 56 wt%, 58 wt% or 60 wt%, etc.

In an optional embodiment, the particle size distribution Dv50 of the pre-lithiated silicon-carbon negative electrode material is 3-15 µm, which may be, for example, 3 µm, 4 µm, 5 µm, 6 µm, 7 µm, 8 µm, 9 µm, 10 µm, 11 µm, 12 µm, 13 µm, 14 µm or 15 µm, etc.

In an optional embodiment, the particle size concentration degree of the pre-lithiated silicon-carbon negative electrode material is 0.4-1.1, which may be, for example, 0.4, 0.5, 0.6, 0.7, 0.8, 0.9, 1.0 or 1.1, etc.

In an optional embodiment, the specific surface area of the pre-lithiated silicon-carbon negative electrode material is 30 m²/g or less, which may be, for example, 30 m²/g, 28 m²/g, 26 m²/g, 24 m²/g, 22 m²/g, 20 m²/g, 18 m²/g, 15 m²/g, 10 m²/g, 9 m²/g, 8 m²/g, 6 m²/g, 4 m²/g, 2 m²/g or 1 m²/g, etc.

In a second aspect, the present disclosure provides a preparation method for a pre-lithiated silicon-carbon negative electrode material of the first aspect, the preparation method including the following steps:
depositing nano silicon particles in the pores of the porous carbon substrate to obtain the silicon-carbon material substrate; and
sequentially preparing the carbon coating layer and the composite coating layer on the silicon-carbon material substrate to obtain the pre-lithiated silicon-carbon negative electrode material.

In the present disclosure, according to the preparation method, nano silicon particles are deposited in the pores of the porous carbon substrate, that is, the nano silicon particles are mostly distributed in the pores of the porous carbon substrate, the overall capacity of the silicon-carbon negative electrode material is increased by utilizing the high theoretical specific capacity of silicon. Then, a compact carbon coating layer is prepared on the silicon-carbon material substrate, so that the volume expansion of the silicon-carbon negative electrode material during use is alleviated and its conductivity is improved, and the inner core and the electrolyte are also isolated, which is beneficial to improving the cycling performance of the silicon-carbon negative electrode material and improving the coulombic efficiency. Finally, a composite coating layer including a high dielectric constant material and a lithium-containing polymer is used for coating. The high dielectric constant material promotes the dissociation of the lithium salt in the lithium-containing polymer, and more lithium ions are converted into active lithium, thereby improving the capacity and initial coulombic efficiency of the battery, which is beneficial to the desolvation of lithium ions at the interface, and is beneficial to increasing the transport rate of lithium ions, thereby improving the fast charging performance of the battery.

In an optional embodiment, the deposition of the nano silicon particles specifically includes the following steps:
introducing a silicon-containing gas source into the porous carbon substrate for vapor deposition to obtain the silicon-carbon material substrate.

In a more specific and optional embodiment, the deposition of the nano silicon particles specifically includes the following steps:
placing the porous carbon substrate in a thermal deposition furnace, introducing a mixed gas of a silicon-containing gas source and a protective gas into the thermal deposition furnace for vapor deposition to obtain the silicon-carbon material substrate.

It should be noted that in the process of depositing nano silicon particles, a mixed gas composed of a silicon source gas and an inert gas needs to be introduced into the thermal deposition furnace at a certain flow rate, so as to keep the pressure in the furnace stable for continuous introduction of gas.

In an optional embodiment, the silicon-containing gas source comprises a silicon gas source, and the silicon gas source is selected from any one or a combination of at least two of silane, disilane, trisilane or tetrasilane.

In an optional embodiment, the volume of the silicon gas source accounts for 60-100% of the total volume of the silicon gas source, which may be, for example, 60%, 65%, 70%, 75%, 80%, 85%, 90%, 95%, 98%, 99% or 100%, etc.

In an optional embodiment, the silicon-containing gas source further comprises a protective gas, and the protective gas is selected from any one or a combination of at least two of nitrogen, helium, neon, argon, krypton or xenon.

In an optional embodiment, the flow rate of the silicon-containing gas source is 1-50 L/min, which may be, for example, 1 L/min, 2 L/min, 5 L/min, 10 L/min, 15 L/min, 20 L/min, 25 L/min, 30 L/min, 35 L/min, 40 L/min, 45 L/min, 48 L/min or 50 L/min, etc.

In an optional embodiment, the temperature of the vapor deposition is 300-800°C, which may be, for example, 300°C, 350°C, 400°C, 450°C, 500°C, 550°C, 600°C, 650°C, 700°C, 750°C or 800°C, etc.

In an optional embodiment, the heat preservation duration of the vapor deposition is 2-20 h, which may be, for example, 2 h, 4 h, 6 h, 8 h, 10 h, 12 h, 14 h, 16 h, 18 h or 20 h, etc.

In an optional embodiment, the gas pressure of the vapor deposition is 1-10 kPa, which may be, for example, 1 kPa, 2 kPa, 3 kPa, 4 kPa, 5 kPa, 6 kPa, 7 kPa, 8 kPa, 9 kPa or 10 kPa, etc.

In an optional embodiment, a preparation method for the carbon coating layer comprises any one or a combination of at least two of a solid-phase carbon coating treatment, a liquid-phase carbon coating treatment or a vapor-phase carbon coating treatment, and the vapor-phase carbon coating treatment is preferred.

In an optional embodiment, the vapor-phase carbon coating treatment specifically includes the following steps:
introducing a carbon-containing gas source into the silicon-carbon material substrate for thermal cracking, to form a carbon coating layer on the silicon-carbon material substrate.

In a more specific and optional embodiment, the vapor-phase carbon coating treatment specifically includes the following steps:
after the preparation of the above silicon-carbon material substrate is finished (that is, after the deposition of silicon nanoparticles is finished), a mixed gas of a carbon-containing gas source and a protective gas is introduced into a thermal deposition furnace for carbon coating treatment (thermal cracking), and a carbon coating layer is formed on the silicon-carbon material substrate.

It should be noted that a mixed gas composed of a carbon source gas and an inert gas is introduced into the thermal deposition furnace at a certain flow rate for carbon coating treatment, and continuous introduction of gas is carried out during this process to control the mass ratio of the carbon coating layer. In addition, after the carbon coating treatment is finished, the temperature is lowered to room temperature, and the obtained material is further subjected to steps of scattering, sieving and demagnetization to obtain a silicon-carbon material substrate with the carbon coating layer.

In an optional embodiment, the carbon-containing gas source comprises a carbon gas source, and the carbon gas source is selected from any one or a combination of at least two of alkane gases, alkene gases, alkyne gases, aromatic hydrocarbon gases, alcohol gases or ketone gases.

In an optional embodiment, the alkane gases are C1-C6 (which may be, for example, C1, C2, C3, C4, C5, C6) linear or branched alkane gases, including but not limited to methane, ethane or propane, etc.

In an optional embodiment, the alkene gases are C2-C6 (which may be, for example, C2, C3, C4, C5, C6) linear or branched alkene gases, including but not limited to ethylene, etc.

In an optional embodiment, the alkyne gases are C2-C6 (which may be, for example, C2, C3, C4, C5, C6) linear or branched alkyne gases, including but not limited to acetylene, etc.

In an optional embodiment, the aromatic hydrocarbon gases are substituted or unsubstituted benzene gases, which may be, for example, benzene, alkyl substituted benzene or dialkyl substituted benzene, etc., including but not limited to benzene, toluene or xylene, etc.

In an optional embodiment, the alcohol gases include, but are not limited to, gaseous methanol or ethanol.

In an optional embodiment, the ketone gases include, but are not limited to, gaseous acetone, etc.

In an optional embodiment, the carbon gas source accounts for 60-100% of the total volume of the carbon gas source, which may be, for example, 60%, 65%, 70%, 75%, 80%, 85%, 90%, 95%, 100%, etc.

In an optional embodiment, the carbon-containing gas source further comprises a protective gas, and the protective gas is selected from any one or a combination of at least two of nitrogen, helium, neon, argon, krypton or xenon.

In an optional embodiment, the flow rate of the carbon-containing gas source is 1-50 L/min, which may be, for example, 1 L/min, 5 L/min, 10 L/min, 15 L/min, 20 L/min, 25 L/min, 30 L/min, 35 L/min, 40 L/min, 45 L/min or 50 L/min, etc.

In an optional embodiment, the temperature of thermal cracking is 500-1200°C, which may be, for example, 500°C, 600°C, 700°C, 800°C, 900°C, 1000°C, 1100°C or 1200°C, etc.

In an optional embodiment, the heat preservation duration of thermal cracking is 1-6 h, which may be, for example, 1 h, 1.5 h, 2 h, 2.5 h, 3 h, 3.5 h, 4 h, 4.5 h, 5 h, 5.5 h or 6 h, etc.

In an optional embodiment, the reaction pressure of thermal cracking is 1-10 kPa, which may be, for example, 1 kPa, 2 kPa, 3 kPa, 4 kPa, 5 kPa, 6 kPa, 7 kPa, 8 kPa, 9 kPa or 10 kPa, etc.

In an optional embodiment, the preparation of the composite coating layer specifically includes the following two methods, method A or method B:
A. firstly preparing a high dielectric constant material layer on a silicon-carbon material substrate with a carbon coating layer, and then preparing a lithium-containing polymer layer on the high dielectric constant material layer to obtain a pre-lithiated silicon-carbon negative electrode material, that is, a pre-lithiated silicon-carbon negative electrode material with a composite coating layer having the above structure in the form of a is obtained;
B. preparing a blended layer formed by a high dielectric constant material and a lithium-containing polymer on a silicon-carbon material substrate with a carbon coating layer, that is, a pre-lithiated silicon-carbon negative electrode material with a composite coating layer having the above structure in the form of b is obtained.

In an optional embodiment, in the method A, a preparation method for the high dielectric constant material layer is selected from any one or a combination of at least two of a high-temperature solid-phase calcination method, a coprecipitation plus calcination method, an oxalate precipitation method, a hydrothermal method, a vapor-phase method, a citrate method, a sol-gel method or a low-temperature combustion synthesis method, and the sol-gel method is preferred.

In the present disclosure, it is preferred to prepare the high dielectric constant material by the sol-gel method, which can realize uniform mixing at molecular level, accurately control the coating uniformity and integrity of the coating layer, and control the size and shape of particles in the sol, thus affecting the microstructure and quality of the final coating layer.

In an optional embodiment, in the method A, the sol-gel method specifically includes the following steps:
placing the silicon-carbon material substrate with a carbon coating layer in a sol containing a high dielectric constant material, stirring and dispersing same, and then subjecting same to a heat treatment to form a high dielectric constant material layer on the carbon coating layer.

In a more specific and optional embodiment, in the method A, the sol-gel method specifically includes the following steps:
soaking the silicon-carbon material substrate with the carbon coating layer in the sol containing the high dielectric constant material, stirring same with a disperser to make same disperse evenly, heating same at 40-60°C after stirring, so as to make the solvent volatilize to form a gel uniformly wrapped on the surface of the silicon-carbon material, and then performing heat treatment to form a uniform and stable high dielectric constant coating layer on the silicon-carbon surface layer.

In an optional embodiment, in the method A, the rotational speed of the stirring and dispersing in the sol-gel method is 500-2000 rpm, which may be, for example, 500 rpm, 600 rpm, 800 rpm, 1000 rpm, 1200 rpm, 1400 rpm, 1600 rpm, 1800 rpm or 2000 rpm, etc.

In an optional embodiment, in the method A, the duration of the stirring and dispersing in the sol-gel method is 1-5 h, which may be, for example, 1 h, 1.5 h, 2 h, 2.5 h, 3 h, 3.5 h, 4 h, 4.5 h or 5 h, etc.

In an optional embodiment, in the method A, the heating rate of the heat treatment in the sol-gel method is 1-10°C·min⁻¹, which may be, for example, 1°C·min⁻¹, 2°C·min⁻¹, 3°C·min⁻¹, 4°C·min⁻¹, 5°C·min⁻¹, 6°C·min⁻¹, 7°C·min⁻¹, 8°C·min⁻¹, 9°C·min⁻¹ or 10°C·min⁻¹, etc.

In an optional embodiment, in the method A, the temperature of the heat treatment in the sol-gel method is 300-550°C, which may be, for example, 300°C, 320°C, 340°C, 360°C, 380°C, 400°C, 420°C, 440°C, 460°C, 480°C, 500°C, 520°C, 540°C or 550°C, etc.

In an optional embodiment, in the method A, the duration of the heat treatment in the sol-gel method is 15-48 h, which may be, for example, 15 h, 16 h, 18 h, 20 h, 22 h, 24 h, 25 h, 28 h, 30 h, 32 h, 35 h, 40 h, 42 h, 45 h or 48 h, etc.

In a more specific and optional embodiment, in the method A, the raw materials for preparing the sol containing the high dielectric constant material include: a high dielectric constant material, a stabilizer and a solvent.

In an optional embodiment, the molar ratio of the high dielectric constant material to the stabilizer is 1: (1-3), which may be, for example, 1:1, 1:1.5, 1:2, 1:2.5 or 1:3, etc.

In an optional embodiment, the mass ratio of the preparation raw materials of the high dielectric constant material to the solvent is 1: (10-40), which may be, for example, 1:10, 1:15, 1:20, 1:25, 1:30, 1:35 or 1:40, etc.

In an optional embodiment, the stabilizer is acetylacetone.

In an optional embodiment, the solvent is ethanol and/or acetic acid.

As an optional embodiment of the present disclosure, in the method A, when the high dielectric constant material is BT, the sol containing the high dielectric constant material is prepared by the following method:
(a) dissolving a barium source in an acid to obtain a barium source solution; dissolving a titanium source in an alcohol to obtain a titanium source solution;
(b) mixing the barium source solution, the titanium source solution, and the stabilizer to obtain a mixed solution containing the stabilizer;
(c) reacting the mixed solution containing the stabilizer to obtain the sol containing the high dielectric constant material.

In an optional embodiment, in step (a), the barium source is barium acetate.

In an optional embodiment, in step (a), the titanium source is tetrabutyl titanate.

In an optional embodiment, in step (a), the acid is acetic acid.

In an optional embodiment, in step (a), the alcohol is ethanol.

In an optional embodiment, in step (a), the mass ratio of the barium source to the acid is 1: (10-40), which may be, for example, 1:10, 1:15, 1:20, 1:25, 1:30, 1:35 or 1:40, etc.

In an optional embodiment, the mass ratio of the barium source to the alcohol is 1: (10-40), which may be, for example, 1:10, 1:15, 1:20, 1:25, 1:30, 1:35 or 1:40, etc.

In an optional embodiment, in step (b), the stabilizer is added in an amount of 2 mol/Ti⁺.

In an optional embodiment, in step (c), the temperature of the reaction is 40-80°C, which may be, for example, 40°C, 45°C, 50°C, 55°C, 60°C, 65°C, 70°C, 75°C or 80°C, etc.

In an optional embodiment, in step (c), the duration of the reaction is 12-48 h, which may be, for example, 12 h, 15 h, 20 h, 25 h, 30 h, 35 h, 40 h, 45 h or 48 h, etc.

In an optional embodiment, in the method A, preparing the lithium-containing polymer layer specifically includes the following steps:
dispersing the silicon-carbon material substrate having the high dielectric constant material layer, a binder, a conductive agent and a lithium salt in water to obtain an aqueous slurry, and then drying same to form a lithium-containing polymer layer on the high dielectric constant material layer, so as to obtain the pre-lithiated silicon-carbon negative electrode material.

In an optional embodiment, in the method B, forming the blended layer by a high dielectric constant material and a lithium-containing polymer specifically includes the following steps:
dispersing a silicon-carbon material substrate with a carbon coating layer, a high dielectric constant material, a binder, a conductive agent and a lithium salt in water to obtain an aqueous slurry, and then drying same to form a blended layer formed by the high dielectric constant material and the lithium-containing polymer on the carbon coating layer, so as to obtain the pre-lithiated silicon-carbon negative electrode material.

In an optional embodiment, in the method A or B, the solid content of the aqueous slurry is 3-30 wt%, which may be, for example, 3 wt%, 5 wt%, 10 wt%, 15 wt%, 20 wt%, 25 wt% or 30 wt%, etc.

In an optional embodiment, in the method A or B, the drying method includes any one or a combination of at least two of spray drying, vacuum drying, freeze drying, hot air drying and heating drying;
in an optional embodiment, in the method A or B, the temperature for drying is 120-250°C, which may be, for example, 120°C, 140°C, 160°C, 180°C, 200°C, 220°C, 240°C or 250°C, etc.

In a third aspect, the present disclosure provides a negative electrode plate comprising a pre-lithiated silicon-carbon negative electrode material of the first aspect.

In a fourth aspect, the present disclosure provides a lithium ion battery comprising a pre-lithiated silicon-carbon negative electrode material of the first aspect, or a negative electrode plate of the third aspect.

In an optional embodiment, the reversible specific capacity of a lithium ion battery prepared from the pre-lithiated silicon-carbon negative electrode material of the present disclosure is 1790 mAh/g or more, which may be, for example, 1790 mAh/g, 1795 mAh/g, 1800 mAh/g, 1805 mAh/g, 1810 mAh/g, 1820 mAh/g, 1830 mAh/g, 1840 mAh/g, 1850 mAh/g, 1860 mAh/g, 1870 mAh/g, 1880 mAh/g, 1890 mAh/g, 1900 mAh/g, 1910 mAh/g or 1920 mAh/g, etc., and more preferably 1900 mAh/g or more.

In an optional embodiment, the capacity retention rate after 300 cycles of a lithium ion battery prepared from the pre-lithiated silicon-carbon negative electrode material of the present disclosure is 94% or more, which may be, for example, 94%, 94.2%, 94.5%, 94.8%, 95%, 95.2%, 95.5%, 95.8%, 96%, 96.2%, 96.5%, 96.8% or 97%, etc., and more preferably 96% or more.

In an optional embodiment, the initial coulombic efficiency of a lithium ion battery prepared from the pre-lithiated silicon-carbon negative electrode material of the present disclosure is 88% or more, which may be, for example, 88%, 88.5%, 89%, 89.5%, 90%, 90.5%, 91%, 91.5%, 92%, 92.5% or 93%, etc.

In an optional embodiment, the resistivity of a lithium ion battery prepared from the pre-lithiated silicon-carbon negative electrode material of the present disclosure is 8 Ω·cm or less, which may be, for example, 8 Ω·cm, 7.5 Ω·cm, 7 Ω·cm, 6.5 Ω·cm, 6 Ω·cm, 5.5 Ω·cm, 5 Ω·cm, 4.5 Ω·cm, 4 Ω·cm, 3.5 Ω·cm, 3 Ω·cm, 2.5 Ω·cm, 2 Ω·cm, etc.

The features and performances of the present disclosure will be further described in detail below with reference to examples.

### Example 1

This example provided a pre-lithiated silicon-carbon negative electrode material, which was prepared by the following steps:
S1, preparation of silicon-carbon material substrate
under an argon atmosphere, 100 g of a porous carbon material as a substrate was placed in a thermal deposition furnace with a temperature of 500°C, and a mixed gas composed of 80 vol% of silane and 20 vol% of argon was introduced at a flow rate of 15 L/min, and the pressure in the furnace was kept at 15 kPa, so that silicon particles were continuously nucleated and deposited inside the pores of the porous carbon, and the gas was continuously introduced for 10 h,
wherein the average pore size of the porous carbon material is 5 nm; the porous carbon substrate included 23.28% of micropores, 73.18% of mesopores and 3.54% of macropores; the specific surface area of the porous carbon material is 1800 m²/g; the pore volume of the porous carbon material is 1.2 cm³/g; the porous carbon material has the following particle size distribution: Dv0 = 0.5µm, Dv10 = 2.8 µm, Dv50 = 6 µm, Dv90 = 9.4 µm, Dv100 = 22.3 µm; the span value = 1.1; and the crystal domain size of the nano silicon particles is 5.6 nm.
S2, preparation of carbon coating layer

After the deposition of silicon is finished, a mixed gas composed of 70 vol% of acetylene and 30 vol% of argon was introduced at a flow rate of 5 L/min for carbon coating, and the gas was continuously introduced for 2 h. After the coating is finished, the temperature was reduced to room temperature, and the material is subjected to means of scattering, sieving and demagnetization to obtain a silicon-carbon material substrate with a carbon coating layer.

S3, preparation of high dielectric constant layer
(a) 2.19 g (8.58 mmol) of barium acetate was dissolved in 30 g of acetic acid and stirred for 30 min to form a uniform barium source solution; 2.92 g (8.58 mmol) of tetrabutyl titanate was dissolved in 40 g of ethanol and stirred for 30 min to form a uniform titanium source solution;
(b) the barium source solution and the titanium source solution were mixed, and 1.72 g (17.16 mmol) of acetylacetone was added to obtain a mixed solution containing a stabilizer;
(c) the mixed solution containing a stabilizer was placed in a hot water bath at 60°C and stirred for 15 h to form a uniform orange sol, so as to obtain the sol; and
(d) 98 g of the silicon-carbon material substrate with a carbon coating layer prepared in S2 was slowly added to the above sol (while stirring), wherein the rotational speed of the stirring was set at 1200 rpm. After stirring for 3 h, the slurry was placed into a tube furnace, nitrogen was introduced, and the heating rate was set at 5°C·min⁻¹ to raise the temperature to 450°C for heat treatment for 24 h, and then it was naturally cooled to room temperature to obtain a silicon-carbon material coated with a high dielectric constant material layer.

S4, preparation of lithium-containing polymer layer
(a) 0.4 g of a conductive agent (the specific name: poly(3,4-ethylenedioxythiophene): poly(styrene sulfonate)) was added into 300 mL of water, and stirred for 1.5 h to obtain a slurry A, wherein the rotational speed of the stirring was set at 350 rpm; a LiAsF₆ solution with a solid content of 3 wt% was prepared;
(b) 16.67 g of the 3 wt% LiAsF₆ solution and 1.6 g of a polyacrylic acid binder were added into the slurry A, and stirred for 1 h to obtain a coating slurry B, wherein the rotational speed of the stirring was set at 600 rpm;
(c) 98 g of the silicon-carbon material coated with a high dielectric constant material layer prepared in S3 was added into the above coating slurry B and stirred for 3.5 h to obtain a mixed slurry C, wherein the rotational speed of the stirring was set at 1400 rpm;
(d) 1600 mL of water was added into the mixed slurry C and stirring was continued for 1 h to obtain a mixed slurry D, wherein the rotational speed of the stirring was set at 600 rpm; and
(e) the mixed slurry D was dried by spray drying at a drying temperature of 200°C to obtain the pre-lithiated silicon-carbon negative electrode material (as shown in FIG. 2), wherein the feeding speed is 600 mL/h.

In the finally obtained pre-lithiated silicon-carbon negative electrode material, the high dielectric constant material layer accounts for 1.7 wt% of the total mass of the pre-lithiated silicon-carbon negative electrode material, and the lithium-containing polymer layer accounts for 3.2 wt% of the total mass of the pre-lithiated silicon-carbon negative electrode material.

### Example 2

This example provided a pre-lithiated silicon-carbon negative electrode material, which was prepared by the following steps:
S1, preparation of silicon-carbon material substrate: it was completely consistent with the above Example 1.

S2, preparation of carbon coating layer: it was completely consistent with the above Example 1.

S3, preparation of blended layer formed by high dielectric constant material and lithium-containing polymer:
(a) 0.4 g of a conductive agent (the specific name: poly(3,4-ethylenedioxythiophene): poly(styrene sulfonate)) was added into 300 mL of water, and stirred for 1.5 h to obtain a slurry A, wherein the rotational speed of the stirring was set at 350 rpm; a LiAsF₆ solution with a solid content of 3 wt% was prepared;
(b) 16.67 g of the 3 wt% LiAsF₆ solution and 1.6 g of a polyacrylic acid binder were added into the slurry A, and stirred for 1 h to obtain a coating slurry B, wherein the rotational speed of the stirring was set at 600 rpm;
(c) 98 g of the silicon-carbon material substrate with a carbon coating layer prepared in S2, 0.2 g of nano N₄Si₃ and 1.8 g of PVDF were added into the above coating slurry B and stirred for 3.5 h to obtain a mixed slurry C, wherein the rotational speed of the stirring was set at 1400 rpm;
(d) 1600 mL of water was added into the mixed slurry C and stirring was continued for 1 h to obtain a mixed slurry D, wherein the rotational speed of the stirring was set at 600 rpm; and
(e) the mixed slurry D was dried by spray drying at a drying temperature of 200°C to obtain the pre-lithiated silicon-carbon negative electrode material, wherein the feeding speed is 600 mL/h.

### Example 3

This example provided a pre-lithiated silicon-carbon negative electrode material, which was prepared by the following steps:
S1, preparation of silicon-carbon material substrate: it was completely consistent with the above Example 1.

S2, preparation of carbon coating layer: it was completely consistent with the above Example 1.

S3, preparation of high dielectric constant layer
(a) 1.10 g (4.29 mmol) of barium acetate was dissolved in 30 g of acetic acid and stirred for 30 min to form a uniform barium source solution; 1.46 g (4.29 mmol) was dissolved in 40 g of ethanol and stirred for 30 min to form a uniform titanium source solution;
(b) the barium source solution and the titanium source solution were mixed and 0.86 g (8.58 mmol) of acetylacetone was added to obtain a mixed solution containing a stabilizer;
(c) the mixed solution containing a stabilizer was placed in a hot water bath at 60°C and stirred for 15 h to form a uniform orange sol, so as to obtain the sol; and
(d) 99 g of the silicon-carbon material substrate with a carbon coating layer prepared in S2 was slowly added to the above sol (while stirring), wherein the rotational speed of the stirring was set at 1200 rpm. After stirring for 3 h, the slurry was placed into a tube furnace, nitrogen was introduced, and the heating rate was set at 5°C·min⁻¹ to raise the temperature to 450°C for heat treatment for 24 h, and then it was naturally cooled to room temperature to obtain a silicon-carbon material coated with a high dielectric constant material layer.

S4, preparation of lithium-containing polymer layer: it was completely consistent with the above Example 1.

In the finally obtained pre-lithiated silicon-carbon negative electrode material, the high dielectric constant material layer accounts for 0.9 wt% of the total mass of the pre-lithiated silicon-carbon negative electrode material, and the lithium-containing polymer layer accounts for 3.4 wt% of the total mass of the pre-lithiated silicon-carbon negative electrode material.

### Example 4

This example provided a pre-lithiated silicon-carbon negative electrode material, which was prepared by the following steps:
S1, preparation of silicon-carbon material substrate: it was completely consistent with the above Example 1.

S2, preparation of carbon coating layer: it was completely consistent with the above Example 1.

S3, preparation of high dielectric constant layer
(a) 3.30 g (12.87 mmol) of barium acetate was dissolved in 30 g of acetic acid and stirred for 30 min to form a uniform barium source solution; 4.38 g (12.87 mmol) of tetrabutyl titanate was dissolved in 40 g of ethanol and stirred for 30 min to form a uniform titanium source solution;
(b) the barium source solution and the titanium source solution were mixed and 2.58 g (25.74 mmol) of acetylacetone was added to obtain a mixed solution containing a stabilizer;
(c) the mixed solution containing a stabilizer was placed in a hot water bath at 60°C and stirred for 15 h to form a uniform orange sol, so as to obtain the sol; and
(d) 97 g of the silicon-carbon material substrate with a carbon coating layer prepared in S2 was slowly added to the above sol (while stirring), wherein the rotational speed of the stirring was set at 1200 rpm. After stirring for 3 h, the slurry was placed into a tube furnace, nitrogen was introduced, and the heating rate was set at 5°C·min⁻¹ to raise the temperature to 450°C for heat treatment for 24 h, and then it was naturally cooled to room temperature to obtain a silicon-carbon material coated with a high dielectric constant material layer.

S4, preparation of lithium-containing polymer layer: it was completely consistent with the above Example 1.

In the finally obtained pre-lithiated silicon-carbon negative electrode material, the high dielectric constant material layer accounts for 2.8 wt% of the total mass of the pre-lithiated silicon-carbon negative electrode material, and the lithium-containing polymer layer accounts for 2.8 wt% of the total mass of the pre-lithiated silicon-carbon negative electrode material.

### Example 5

This example provided a pre-lithiated silicon-carbon negative electrode material, which was prepared by the following steps:
S1, preparation of silicon-carbon material substrate: it was completely consistent with the above Example 1.

S2, preparation of carbon coating layer: it was completely consistent with the above Example 1.

S3, preparation of high dielectric constant layer
(a) 2.24 g (10.90 mmol) of strontium acetate was dissolved in 30 g of acetic acid and stirred for 30 min to form a uniform strontium source solution; 3.71 g (10.90 mmol) of tetrabutyl titanate was dissolved in 40 g of ethanol and stirred for 30 min to form a uniform titanium source solution;
(b) the strontium source solution and the titanium source solution were mixed and 2.18 g (21.80 mmol) of acetylacetone was added to obtain a mixed solution containing a stabilizer;
(c) the mixed solution containing a stabilizer was placed in a hot water bath at 60°C and stirred for 15 h to form a uniform orange sol, so as to obtain the sol; and
(d) 98 g of the silicon-carbon material substrate with a carbon coating layer prepared in S2 was slowly added to the above sol (while stirring), wherein the rotational speed of the stirring was set at 1200 rpm. After stirring for 3 h, the slurry was placed into a tube furnace, nitrogen was introduced, and the heating rate was set at 5°C·min⁻¹ to raise the temperature to 450°C for heat treatment for 24 h, and then it was naturally cooled to room temperature to obtain a silicon-carbon material coated with a high dielectric constant material layer.

S4, preparation of lithium-containing polymer layer: it was completely consistent with the above Example 1.

In the finally obtained pre-lithiated silicon-carbon negative electrode material, the high dielectric constant material layer accounts for 1.8 wt% of the total mass of the pre-lithiated silicon-carbon negative electrode material, and the lithium-containing polymer layer accounts for 3.0 wt% of the total mass of the pre-lithiated silicon-carbon negative electrode material.

### Example 6

This example provided a pre-lithiated silicon-carbon negative electrode material, which was different from Example 1 only in that in step (d) of the preparation process of the high dielectric constant layer in S3, the temperature was raised to 300°C for heat treatment, and other steps were completely consistent with those of Example 1.

### Example 7

This example provided a pre-lithiated silicon-carbon negative electrode material, which was different from Example 1 only in that in step (d) of the preparation process of the high dielectric constant layer in S3, the temperature was raised to 550°C for heat treatment, and other steps were completely consistent with those of Example 1.

### Example 8

This example provided a pre-lithiated silicon-carbon negative electrode material, which was different from Example 1 only in that in step (d) of the preparation process of the high dielectric constant layer in S3, the heat treatment time was shorten from 24 h to 15 h, and other steps were completely consistent with those of Example 1.

### Example 9

This example provided a pre-lithiated silicon-carbon negative electrode material, which was different from Example 1 only in that in step (d) of the preparation process of the high dielectric constant layer in S3, the heat treatment time was increased from 24 h to 48 h, and other steps were completely consistent with those of Example 1.

### Example 10

This example provided a pre-lithiated silicon-carbon negative electrode material, which was different from Example 1 only in that in the preparation process of the lithium-containing polymer layer in S4, the LiAsF₆ solution was replace with a LiClO₄ solution with the same solid content, and other steps were completely consistent with those of Example 1.

### Example 11

This example provided a pre-lithiated silicon-carbon negative electrode material, which was different from Example 1 only in that in the preparation process of the lithium-containing polymer layer in S4, the conductive agent (poly(3,4-ethylenedioxythiophene): poly(styrene sulfonate)) was replaced with an equal mass of polyaniline, and other steps were completely consistent with those of Example 1.

### Example 12

This example provided a pre-lithiated silicon-carbon negative electrode material, which was different from Example 1 only in that in the preparation process of the lithium-containing polymer layer in S4, the polyacrylic acid binder was replaced with a combination of 0.8 g of the polyacrylic acid binder and 0.8 g of a polydopamine binder, and other steps were completely consistent with those of Example 1.

### Comparative Example 1

This comparative example provided a pre-lithiated silicon-carbon negative electrode material, which was different from Example 1 only in that S3 was not performed, that is, the high dielectric constant layer was not prepared, and other steps were completely consistent with those of Example 1.

### Comparative Example 2

This comparative example provided a pre-lithiated silicon-carbon negative electrode material, which was different from Example 1 only in that in step (d) of the preparation process of the high dielectric constant layer in S3, the heat treatment time was shorten from 24 h to 10 h, and other steps were completely consistent with those of Example 1.

### Comparative Example 3

This comparative example provided a pre-lithiated silicon-carbon negative electrode material, which was different from Example 1 only in that in step (d) of the preparation process of the high dielectric constant layer in S3, the heat treatment time was increased from 24 h to 60 h, and other steps were completely consistent with those of Example 1.

### Comparative Example 4

This comparative example provided a pre-lithiated silicon-carbon negative electrode material, which was different from Example 1 only in that in step (d) of the preparation process of the high dielectric constant layer in S3, the temperature of the heat treatment was reduced from 450°C to 150°C, and other steps were completely consistent with those of Example 1.

### Comparative Example 5

This comparative example provided a pre-lithiated silicon-carbon negative electrode material, which was different from Example 1 only in that in step (d) of the preparation process of the high dielectric constant layer in S3, the temperature of the heat treatment was increased from 450°C to 700°C, and other steps were completely consistent with those of Example 1.

### Test examples

The products prepared in each example and each comparative example were used as negative electrode materials respectively to assemble batteries.
(1) Initial coulombic efficiency and specific charge capacity: the final silicon-carbon negative electrode material, SP, CMC and PAALi were prepared into electrode plates according to the ratio of 80:10:5:5. A Li/Si half cell was prepared with a lithium metal as the counter electrode, LiPF6 as the lithium salt, a mixed solvent of EC and DEC with the volume ratio of 1:1 as the electrolyte solvent and a Celgard 2400 membrane as the separator, and its initial coulombic efficiency and specific charge capacity were tested. Test conditions: voltage range: 0.005V-1.5V, charge/discharge 0.1C/0.1C.
(2) A pouch battery was tested as follows: a pouch lithium ion battery was prepared with a coated silicon-carbon material doped with 80% of artificial graphite as the negative electrode, a NCM 111 ternary material as the positive electrode material, LiPF6 as the lithium salt, a mixed solvent of EC and DEC with the volume ratio of 1:1 as the electrolyte solvent and a Celgard 2400 membrane as the separator, and was subjected to a cycling test (the capacity retention rate after 300 cycles). The test conditions were as follows: voltage range: 2.5V-4.2V, charge/discharge 1C/1C.
(3) Powder resistivity: it was tested by a semiconductor powder resistivity tester (30 MPa, four-point probe, V1.4).

The specific test results were shown in Table 1 below:

**Table 1**

| Sample | Reversible specific capacity (mAh/g) | Initial coulombic efficiency (%) | Capacity retention rate after 300 cycles (%) | Powder resistivity (Ω·cm) |
|---|---|---|---|---|
| Example 1 | 1916 | 92.5 | 96.68 | 2.95 |
| Example 2 | 1879 | 91.6 | 96.02 | 3.08 |
| Example 3 | 1846 | 91.2 | 95.26 | 4.62 |
| Example 4 | 1857 | 91.5 | 95.37 | 4.28 |
| Example 5 | 1889 | 91.9 | 95.96 | 4.33 |
| Example 6 | 1801 | 89.8 | 94.65 | 6.92 |
| Example 7 | 1798 | 89.7 | 94.32 | 7.06 |
| Example 8 | 1793 | 89.9 | 94.73 | 7.12 |
| Example 9 | 1809 | 91.1 | 94.29 | 6.81 |
| Example 10 | 1897 | 91.8 | 96.01 | 3.23 |
| Example 11 | 1876 | 91.9 | 95.15 | 4.33 |
| Example 12 | 1889 | 92.1 | 95.98 | 3.57 |
| Comparative Example 1 | 1782 | 87.2 | 84.11 | 10.62 |
| Comparative Example 2 | 1776 | 85.2 | 90.98 | 14.72 |
| Comparative Example 3 | 1780 | 88.0 | 91.06 | 10.89 |
| Comparative Example 4 | 1763 | 87.3 | 90.88 | 11.55 |
| Comparative Example 5 | 1752 | 84.7 | 89.69 | 18.01 |

As can be seen from the test data in Table 1, the reversible specific capacity of the lithium ion battery prepared from the pre-lithiated silicon-carbon negative electrode material of the present disclosure is 1790 mAh/g or more, and more preferably 1900 mAh/g or more; the capacity retention rate after 300 cycles is 94% or more, and more preferably 96% or more; the initial coulombic efficiency was 88% or more; and the resistivity was 8 Ω·cm or less. This indicates that the pre-lithiated silicon-carbon negative electrode material of the present disclosure specifically solves the problems of the silicon-carbon negative electrode material, such as lower capacity, lower initial coulombic efficiency and poor cycling stability, and the pre-lithiated silicon-carbon negative electrode material of the present disclosure is a silicon-carbon negative electrode material with high capacity, high initial coulombic efficiency and high cycling stability.

From the comparison of the test data of example 1 and comparative example 1, it can be seen that the addition of lithium salt in the coating layer of comparative example 1 does not improve the capacity and the initial coulombic efficiency, this is because the supplemented lithium salt exists in the form of dead lithium and active lithium is not excited therefrom. After the introduction of the high dielectric constant coating, the capacity and initial coulombic efficiency of the silicon-carbon negative electrode material have been improved to some extent, which is attributed to the dissociation of the lithium salt induced by the self-polarization of the high dielectric constant material, and more active lithium is released.

From the comparison of the data of examples 1 and 7-9 and comparative examples 2-5, it can be seen that in order to achieve the best effect of the high dielectric constant material coating in promoting lithium salt dissociation for pre-lithiation, both of the time and temperature of the heat treatment need to be controlled in a suitable range. Especially when the heat treatment time is too short or the heat treatment temperature is too high, the high dielectric constant coating can not improve the pre-lithiation effect, but will deteriorate the performance.

It should be finally noted that the foregoing embodiments are merely used for illustrating rather than limiting the technical solutions of the disclosure. Although the disclosure has been illustrated in detail with reference to the foregoing embodiments, it should be understood by those of ordinary skill in the art that the technical solutions described in the foregoing embodiments may still be modified, or some or all of the technical features thereof may be equivalently substituted; and these modifications or substitutions do not make the essence of the corresponding technical solution depart from the scope of the technical solutions of the embodiments of the disclosure.

### Industrial applicability

The composite coating layer of the pre-lithiated silicon-carbon negative electrode material of the present disclosure has a high dielectric constant material, which can undergo self-polarization under the action of an electric field, thereby promoting the dissociation of a lithium salt in the lithium-containing polymer, and making more lithium ions to be converted into active lithium, which compensate the loss of active lithium caused by SEI film formation and other side reactions, thereby improving the capacity and initial coulombic efficiency of the battery, improving the reversibility of electrode reactions and being beneficial to improving the cycling stability of the battery.

## Claims

1. A pre-lithiated silicon-carbon negative electrode material, **characterized in that** the pre-lithiated silicon-carbon negative electrode material comprises a silicon-carbon material substrate, and a carbon coating layer and a composite coating layer sequentially coated on the silicon-carbon material substrate,
wherein the silicon-carbon material substrate comprises a porous carbon substrate and nano silicon particles distributed within pores of the porous carbon substrate; and
wherein the composite coating layer comprises a high dielectric constant material and a lithium-containing polymer.

2. The pre-lithiated silicon-carbon negative electrode material according to claim 1, **characterized in that** an average pore size of the porous carbon substrate is 1-30 mm;
preferably, the pores of the porous carbon substrate comprise any one or a combination of at least two of micropores, mesopores or macropores;
preferably, the pores of the porous carbon substrate comprise micropores, mesopores and macropores,
wherein the volume of the micropores accounts for 60% or more of the total volume of pores of the porous carbon substrate, the volume of the mesopores accounts for 30-40% of the total volume of pores of the porous carbon substrate, and the volume of the macropores accounts for 10% or less of the total volume of pores of the porous carbon substrate;
preferably, the specific surface area of the porous carbon substrate is 1200-2000 m²/g;
preferably, the pore volume of the porous carbon substrate is 0.6-2.0 cm³/g;
preferably, the porous carbon substrate has the following particle size distribution: Dᵥ0 > 0.2 µm; Dᵥ10 > 2 µm; 3 µm < Dᵥ50 < 8 µm; Dᵥ90 < 10 µm; Dᵥ100 < 30 µm;
preferably, the span of the particle size distribution of the porous carbon substrate is: Span = (Dᵥ90-Dᵥ10)/Dᵥ50 < 1.2;
preferably, the mass of the porous carbon substrate accounts for 30-60% of the mass of the silicon-carbon material substrate;
preferably, the nano silicon particles occupy 40-90% of the total volume of pores of the porous carbon substrate;
preferably, the crystal domain size of the nano silicon particles is 1-10 nm;
preferably, the mass of the nano silicon particles accounts for 40-70% of the mass of the silicon-carbon material substrate; and
preferably, the thickness of the carbon coating layer is 0.1-10 nm.

3. The pre-lithiated silicon-carbon negative electrode material according to claim 1, **characterized in that** the mass of the carbon coating layer accounts for 0.5-5.0% of the total mass of the pre-lithiated silicon-carbon negative electrode material; and
preferably, the specific surface area of the carbon coating layer is 50 m²/g or less.

4. The pre-lithiated silicon-carbon negative electrode material according to claim 1, **characterized in that** the composite coating layer specifically comprises the following two forms of structure, form a or form b:
a. sequentially comprising a high dielectric constant material layer and a lithium-containing polymer layer from inside to outside; and
b. a blended layer formed by a high dielectric constant material and a lithium-containing polymer;
preferably, the mass of the high dielectric constant material accounts for 0.1-5% of the total mass of the pre-lithiated silicon-carbon negative electrode material;
preferably, the mass of the lithium-containing polymer accounts for 0.1-5% of the total mass of the pre-lithiated silicon-carbon negative electrode material;
preferably, the high dielectric constant material layer comprises a high dielectric constant material with a relative dielectric constant of 60-500 at a frequency of 40 Hz-50 MHz;
preferably, the high dielectric constant material is selected from any one or a combination of at least two of a ferroelectric material, an oxide material, a ceramic/polymer-based composite material or a Van der Waals layered material;
preferably, the ferroelectric material is selected from any one or a combination of at least two of a lead-based ferroelectric material, barium titanate, strontium titanate or barium strontium titanate;
preferably, the oxide material is selected from any one or a combination of at least two of titanium dioxide, zirconium dioxide or niobium pentoxide;
preferably, the ceramic-polymer-based composite material comprises a silicon nitride-polyvinylidene fluoride-based composite material and/or a zirconium dioxide-polyimide composite material;
preferably, the Van der Waals layered material comprises bismuth selenium oxide;
preferably, the lithium-containing polymer layer comprises: a binder, a conductive agent and a lithium salt,
wherein the mass of the binder accounts for 0.01-2.5% of the total mass of the pre-lithiated silicon-carbon negative electrode material; the mass of the conductive agent accounts for 0.01-0.5% of the total mass of the pre-lithiated silicon-carbon negative electrode material; the mass of the lithium salt accounts for 0.01-2% of the total mass of the pre-lithiated silicon-carbon negative electrode material;
preferably, the binder is selected from any one or a combination of at least two of polyaniline/polyacrylic acid, polydopamine/polyacrylic acid, polydopamine/polyacrylic acid/polyoxyethylene, polyacrylic acid, polyacrylic acid/polycyanoethyl, polyacrylic acid/carboxymethyl cellulose or polyacrylic acid/polystyrene;
preferably, the conductive agent is selected from any one or a combination of at least two of graphene, acetylene black, carbon black, single-walled carbon nanotubes, multi-walled carbon nanotubes, flake graphite, polyaniline, polypyrrole, polyacetylene, polythiophene or poly(3,4-ethylenedioxythiophene)/polystyrene sulfonic acid; and
preferably, the lithium salt is selected from any one or a combination of at least two of lithium hexafluorophosphate, lithium tetrafluoroborate, lithium perchlorate, lithium hexafluoroarsenate, lithium bis(oxalato)borate, lithium difluoro(oxalato)borate, lithium bis(difluorosulfonyl)imide, lithium bis(trifluoromethylsulfonyl)imide, lithium carbonate, lithium hydroxide, lithium oxide or lithium oxalate.

5. The pre-lithiated silicon-carbon negative electrode material according to claim 1, **characterized in that** the pre-lithiated silicon-carbon negative electrode material has a carbon content of 30-50 wt% and a silicon content of 40-60 wt%;
preferably, the particle size distribution Dᵥ50 of the pre-lithiated silicon-carbon negative electrode material is 3-15 µm;
preferably, the particle size concentration degree of the pre-lithiated silicon-carbon negative electrode material is 0.4-1.1; and
preferably, the specific surface area of the pre-lithiated silicon-carbon negative electrode material is 30 m²/g or less.

6. A preparation method for the pre-lithiated silicon-carbon negative electrode material according to any one of claims 1-5, **characterized in that** the preparation method comprises the following steps:
depositing nano silicon particles in the pores of the porous carbon substrate to obtain the silicon-carbon material substrate; and
sequentially preparing the carbon coating layer and the composite coating layer on the silicon-carbon material substrate to obtain the pre-lithiated silicon-carbon negative electrode material.

7. The preparation method for the pre-lithiated silicon-carbon negative electrode material according to claim 6, **characterized in that** the depositing nano silicon particles specifically comprises the following steps: introducing a silicon-containing gas source into the porous carbon substrate for vapor deposition to obtain the silicon-carbon material substrate;
preferably, the silicon-containing gas source comprises a silicon gas source, and the silicon gas source is selected from any one or a combination of at least two of silane, disilane, trisilane or tetrasilane;
preferably, the volume of the silicon gas source accounts for 60-100% of the total volume of the silicon-containing gas source;
preferably, the silicon-containing gas source further comprises a protective gas, and the protective gas is selected from any one or a combination of at least two of nitrogen, helium, neon, argon, krypton or xenon;
preferably, the flow rate of the silicon-containing gas source is 1-50 L/min;
preferably, the temperature of the vapor deposition is 300-800°C; the heat preservation duration of the vapor deposition is 2-20 h; and the gas pressure of the vapor deposition is 1-10 kPa;
preferably, a preparation method for the carbon coating layer comprises any one or a combination of at least two of a solid-phase carbon coating treatment, a liquid-phase carbon coating treatment or a vapor-phase carbon coating treatment, and the vapor-phase carbon coating treatment is preferred;
preferably, the vapor-phase carbon coating treatment specifically comprises the following steps:
introducing a carbon-containing gas source into the silicon-carbon material substrate for thermal cracking, to form a carbon coating layer on the silicon-carbon material substrate;
preferably, the carbon-containing gas source comprises a carbon gas source, and the carbon gas source is selected from any one or a combination of at least two of alkane gases, alkene gases, alkyne gases, aromatic hydrocarbon gases, alcohol gases or ketone gases;
preferably, the carbon gas source accounts for 60-100% of the total volume of the carbon-containing gas source;
preferably, the carbon-containing gas source further comprises a protective gas, and the protective gas is selected from any one or a combination of at least two of nitrogen, helium, neon, argon, krypton or xenon;
preferably, the flow rate of the carbon-containing gas source is 1-50 L/min; and
preferably, the temperature of the thermal cracking is 500-1200°C, the heat preservation duration of the thermal cracking is 1-6 h, and the reaction gas pressure of the thermal cracking is 1-10 kPa.

8. The preparation method for the pre-lithiated silicon-carbon negative electrode material according to claim 6, **characterized in that** the preparation of the composite coating layer specifically comprises the following two methods, method A or method B:
A. firstly preparing a high dielectric constant material layer on a silicon-carbon material substrate with a carbon coating layer, and then preparing a lithium-containing polymer layer on the high dielectric constant material layer to obtain a pre-lithiated silicon-carbon negative electrode material;
B. preparing a blended layer formed by a high dielectric constant material and a lithium-containing polymer on a silicon-carbon material substrate with a carbon coating layer;
preferably, in the method A, a preparation method for the high dielectric constant material layer is selected from any one or a combination of at least two of a high-temperature solid-phase calcination method, a coprecipitation plus calcination method, an oxalate precipitation method, a hydrothermal method, a vapor-phase method, a citrate method, a sol-gel method or a low-temperature combustion synthesis method, and the sol-gel method is preferred;
preferably, in the method A, the sol-gel method specifically comprises the following steps:
placing the silicon-carbon material substrate with a carbon coating layer in a sol containing a high dielectric constant material, stirring and dispersing same, and then subjecting same to a heat treatment to form a high dielectric constant material layer on the carbon coating layer;
preferably, the rotational speed of the stirring and dispersing is 500-2000 rpm, and the duration of the stirring and dispersing is 1-5 h;
preferably, the heating rate of the heat treatment is 1-10°C·min⁻¹, the temperature of the heat treatment is 300-550°C, and the duration of the heat treatment is 15-48 h;
preferably, in the method A, preparing the lithium-containing polymer layer specifically comprises the following steps:
dispersing the silicon-carbon material substrate having the high dielectric constant material layer, a binder, a conductive agent and a lithium salt in water to obtain an aqueous slurry, and then drying same to form a lithium-containing polymer layer on the high dielectric constant material layer, so as to obtain the pre-lithiated silicon-carbon negative electrode material;
preferably, in the method B, forming the blended layer by a high dielectric constant material and a lithium-containing polymer specifically comprises the following steps:
dispersing a silicon-carbon material substrate with a carbon coating layer, a high dielectric constant material, a binder, a conductive agent and a lithium salt in water to obtain an aqueous slurry, and then drying same to form a blended layer formed by the high dielectric constant material and the lithium-containing polymer on the carbon coating layer, so as to obtain the pre-lithiated silicon-carbon negative electrode material;
preferably, in the method A or B, the solid content of the aqueous slurry is 3-30 wt%; and
preferably, in the method A or B, the temperature for drying is 120-250°C.

9. A negative electrode plate, **characterized in that** the negative electrode plate comprises the pre-lithiated silicon-carbon negative electrode material according to any one of claims 1-5.

10. A lithium ion battery, **characterized in that** the lithium ion battery comprises the pre-lithiated silicon-carbon negative electrode material according to any one of claims 1-5 or a negative electrode plate according to claim 9.
